(19) Europäisches Patentamt
European Patent Office
Office européen des brevets

(11) **EP 1 566 626 B1**

## (12) EUROPEAN PATENT SPECIFICATION

(45) Date of publication and mention
of the grant of the patent:
**20.03.2019 Bulletin 2019/12**

(51) Int Cl.:
**G01N 21/3504** *(2014.01)* **G01N 21/03** *(2006.01)*
**G01N 21/61** *(2006.01)*

(21) Application number: **05001208.7**

(22) Date of filing: **21.01.2005**

(54) **Gas sensor arrangement in an integrated construction**

Gassensoranordnung in integrierter Fassung

Dispositif pour la détection du gaz dans une construction intégrée

(84) Designated Contracting States:
**AT BE BG CH CY CZ DE DK EE ES FI FR GB GR
HU IE IS IT LI LT LU MC NL PL PT RO SE SI SK TR**

(30) Priority: **18.02.2004 DE 102004007946**

(43) Date of publication of application:
**24.08.2005 Bulletin 2005/34**

(73) Proprietor: **Bayerische Motoren Werke
Aktiengesellschaft
80809 München (DE)**

(72) Inventors:
• **Tille, Thomas, Dr.**
**81673 München (DE)**
• **Fischer, Jörg**
**81667 München (DE)**

• **Forlenza, Marco**
**82061 Neuried (DE)**
• **Minuth, Rudi**
**85354 Freising (DE)**
• **Straub, Kuno**
**85356 Freising (DE)**

(74) Representative: **Grünecker Patent- und
Rechtsanwälte
PartG mbB
Leopoldstraße 4
80802 München (DE)**

(56) References cited:
DE-A1- 19 925 196    US-A- 6 067 840
US-A1- 2002 139 934    US-B1- 6 410 918

**Description**

The present invention relates to a gas sensor arrangement comprising at least one radiation source emitting radiation, a gas measuring chamber which may be filled with a gas containing at least one analyte to be measured and at least one detector detecting the radiation and which generates an output signal dependent on the presence and/or concentration of the analyte.

Gas sensor arrangements of this type are known for detecting a wide variety of analytes, for example methane or carbon dioxide. Known gas sensors are disclosed, for example, in EP 0616207 A2, WO 00/55603 A1, and DE 19925196 C2 and are based on the property of the absorption of radiation in a large number of polyatomic gases, particularly in the infrared wavelength range. This absorption occurs in a wavelength characteristic for the relevant gas, for example at 4.24 pm for carbon dioxide. Using infrared gas sensors of this type, it is therefore possible to detect the existence of a gas component and/or the concentration of the gas component. These gas sensors comprise a radiation source, an absorption section, e.g., a measuring chamber, and a radiation detector. The radiation intensity measured by the radiation detector is a measure of the concentration of the absorbing gas. In this case, either a broadband radiation source may be used and the wavelength of interest adjusted via an interference filter or grid or else a selective radiation source, for example a light-emitting diode or a laser, may be used in combination with non-wavelength-selective radiation receivers.

It is known from European patent application 0616207 A2 that the energy efficiency of an infrared gas sensor can be increased if the radiation energy of the radiation source is bundled by a concave mirror at a point at which the infrared detector is located and a funnel-shaped metallized tube is arranged in front of the infrared detector and focuses any incident radiation onto the detection surface of the infrared detector.

Carbon dioxide detection in particular is nowadays becoming increasingly important in the motor vehicle sector. This is due, on the one hand, to the fact that, to increase the energy efficiency during heating and air conditioning, the carbon dioxide content of the air in the interior is monitored in motor vehicles in order to bring about a supply of fresh air via a corresponding fan flap controller only when required, in other words in the event of increased carbon dioxide concentration. On the other hand, modern air conditioning systems are based on carbon dioxide as the coolant. Carbon dioxide gas sensors can therefore fulfil a monitoring function in conjunction with issuing carbon dioxide in the event of potential defects.

US 2002/139934 A1 discloses a multi-component gas analyzer having a cassette-type light path system that includes at least a cassette having a light source system, a light path system, an optical folding system, and an infrared detecting system. The light source system has an infrared light source, and a reflector for providing a parallel infrared light beam. The light path system has a cassette, an optical absorption chamber and a set of concave mirrors. A vent hole set is provided having a plurality of vent holes enclosed by an O-ring for sealing the gas between the stacked-up cassettes. The optical absorption chamber includes a highly reflective coating film coated on the inner wall surface thereof that is employed for introducing the gases to be analyzed and provides a space for contact between the gases and the infrared light.

US 6,410,918 B1 relates to a diffusion-type NDIR gas analyzer which may be mounted on a printed circuit board. A housing comprises a first and a second half shell, which are fabricated from gold plated plastic material to enhance reflectivity and to form a wave guide. A concave mirror is provided around the IR radiation source.

US 6,067,840 A discloses gas sensor having alternately energized infrared radiation sources disposed in a gas chamber at different distances from an infrared detector. Both radiation sources are filtered at the absorbing wavelength of a gas to be monitored with one radiation source located proximate to the detector serving as a "virtual reference". The differential absorption between the two radiation sources is used to determine the concentration of a gas being monitored. In a modified sensor one radiation source is seated in a parabolic recess in a base plate with the radiation focused on one angled end wall of a dished shaped cover member and reflected over to a second angled end wall and into the detector with the radiation sources and the detector attached directly to a circuit board mounting the sensor. The recessed cover with opposed angled end walls is also used with another embodiment in which the radiation sources are both located the same distance from the detector, are alternately energized and are filtered with sensing and reference filters, respectively.

Sensors of this type must, particularly in the motor vehicle sector, meet stringent requirements with respect to ruggedness, reliability, and the capacity to be miniaturized.

The object of the present invention is therefore to disclose an improved gas sensor arrangement of the type mentioned at the outset which, with improved utilization of energy, has a robust and compact construction and can be inexpensively produced.

This object is achieved by a gas sensor arrangement with the features of claim 1. Advantageous developments of this gas sensor arrangement are the subject of a plurality of sub-claims.

The present invention is based on the basic idea that a particularly compact and interference-immune overall construction of the gas sensor arrangement can be achieved in that a concave mirror and a tube constructed at least partially in one piece with a housing in which a radiation source, a gas measuring chamber, and a detector are arranged, and in that the concave mirror and the tube are formed by a reflective coating on a portion of a wall of the housing. A large reduction in the number of requisite components thus makes the production and assembling of the gas sensor arrangement less expensive and simpler. The possibility of providing the entire beam path, which is also called a light channel, with a reflective coating bundling the light makes optimum use, on the one hand, of the radiation supplied by the radiation source and, on the other hand, largely prevents penetration of disruptive leakage radiation from the outside. The reflective coating can, for example, be a metal in this case, such as a gold coating.

As a result of the fact that the housing is formed by a first and a second half-shell which are combined in such a way that a substantially closed gas measuring chamber is formed, assembly can be simplified to the extent that it can be automated.

According to an advantageous development of the present invention the radiation source and the detector are held at least partially in the first half-shell and this is received at least partially in the second half-shell. During assembly, the mechanically sensitive components can thus be first assembled on the first half-shell and the second half-shell can fulfil a protective function against mechanical stresses.

The gas sensor arrangement according to the invention can be integrated into larger electronic systems in a particularly compact manner when constructed in such a way that it can be assembled as a module on a printed circuit carrier. This also provides the advantage that the requisite electronic evaluation device, which further processes the output signal generated by the detector, can be constructed on the same circuit carrier, for example a printed circuit board (PCB).

If a seal, which in conjunction with the printed circuit carrier seals the gas measuring chamber from the environment, is provided on the housing then this solution provides the advantage that penetration of moisture, dust, and stray light may be prevented.

The advantageous properties of the gas sensor arrangement according to the invention are particularly useful when the radiation to be detected is infrared radiation and the at least one radiation source is formed by an infrared radiation source, preferably a light-emitting diode (LED). The use of an LED primarily has the advantage that filter arrangements for selecting the wavelength may be dispensed with and therefore the arrangement can be further miniaturized and simplified. Alternatively, a lamp which emits a broadband light spectrum may also be used.

A funnel-shaped configuration of the metallized tube provides the advantage of focusing the radiation onto the detection surface of the detector. However, a cylindrical embodiment of the metallized tube alone leads to light guidance in the direction of the detector.

According to a particular embodiment, the gas sensor arrangement comprises a measuring radiation source and a reference radiation source. These two radiation sources are arranged symmetrically with respect to at least one axis of symmetry of the gas measuring chamber and the detector is arranged on this axis of symmetry such that the radiation paths of the radiation sources have the same effective path length from the detector. An arrangement of this type can, for example, be operated in such a way that, as disclosed in DE 19925196 C2, the reference radiation source is switched on at intervals to check the age of the measuring radiation source. Deviations with respect to the output signals of the detector when the reference radiation source and measuring radiation source are switched on provide information about the age of the measuring radiation source and this can optionally be compensated. The reliability and the service life of the gas sensor arrangement, particularly in the motor vehicle sector, may be fundamentally increased hereby.

To increase the accuracy of measurement, at least one temperature sensor may also be provided in the gas measuring chamber to monitor the temperature.

A particularly inexpensive and mechanically stable possibility of producing the housing is by production from a plastic material using injection molding. The reflective coating can in this case be a metal, such as gold, which is applied by sputtering, vapor deposition, or electroplating.

The advantageous properties of the gas sensor arrangement according to the invention can advantageously be used for detecting carbon dioxide, for example in the motor vehicle sector, and for monitoring carbon dioxide issuing from leakage points and for checking the air quality in an interior of the vehicle. The gas sensor arrangement according to the invention can, however, also be used for detecting any other gases.

The invention will be described in more detail hereinafter with reference to advantageous configurations illustrated in the accompanying drawings. Similar or corresponding details of the invention are provided with the same reference numerals. In the drawings:

Fig. 1 is a perspective open view of a housing of a gas sensor arrangement according to the invention;
Fig. 2 is a side view of a first half-shell of the housing;
Fig. 3 is a view from below of the first half-shell of the housing;
Fig. 4 is a side view of the first half-shell of the housing;
Fig. 5 is a view from above of the first half-shell of the housing;
Fig. 6 is a view from below of the second half-shell of the housing in Fig. 1;

Fig. 7 is a sectional view through the second half-shell of the housing along the cutting line A-A in Fig. 6;

Fig. 8 is a view from above of the second half-shell of the housing in Fig. 1;

Fig. 9 is a side view of the second half-shell of the housing;

Fig. 10 is a further side view of the second half-shell of the housing from Fig. 1; and

Fig. 11 is a schematic diagram for calculating an optical concave mirror for radiation focusing.

The construction and mode of operation of a gas sensor arrangement 100 according to the present invention will be described in more detail hereinafter with reference to the figures. In order to preserve the overall view, radiation sources, which in the present embodiment may be lamps which emit a broadband light spectrum or light-emitting diodes (LEDs), and an infrared radiation detector, are not shown.

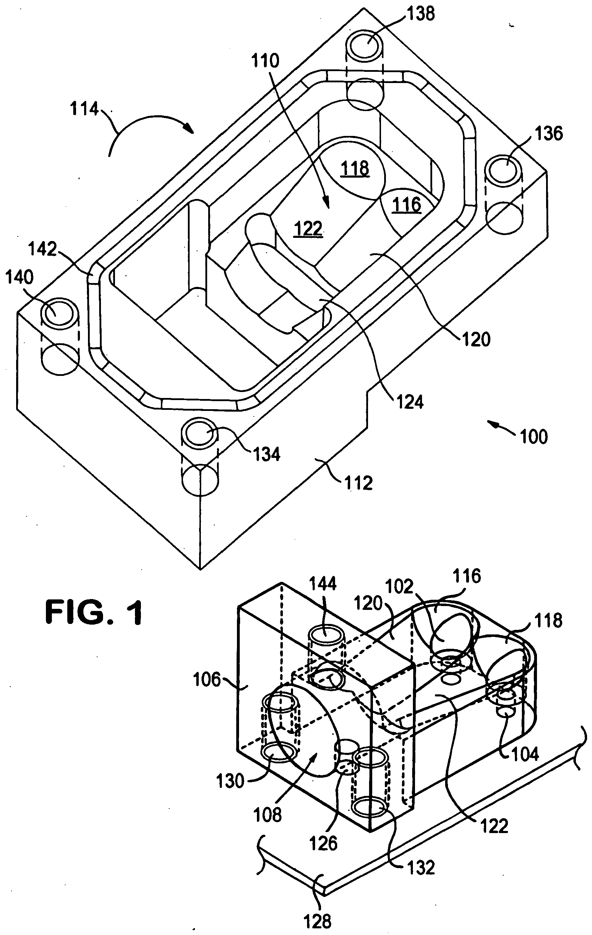

As shown in Fig. 1, an advantageous embodiment of the present invention uses the measuring principle of a measuring radiation source and a reference radiation source, which are both focused on a single detector. However, the present invention can also be used for more than the illustrated radiation sources and detector units.

The gas sensor arrangement 100 according to the present invention comprises two infrared radiation sources (not shown here), which are arranged in two source receiving openings 102, 104 of a first half-shell 106 of a housing. A detector (not shown here) held in a detector receiving opening 108 of the first half-shell 106 evaluates incident infrared radiation and supplies an electrical output signal as a function of the measured radiation. The intensity of the radiation incident on the detector depends in this case on the composition of a gas contained in a gas measuring chamber 110. As can be seen from Fig. 1, the gas measuring chamber 110 is formed by combining the first half-shell 106 with a second half-shell 112, which is slipped over the first half-shell 106 for this purpose (see arrow 114).

According to the present invention, an inner side of the first and second half-shells 106, 112 is structured in such a way that concave mirrors 116, 118 are formed around the radiation sources. The source receiving openings 102, 104 are arranged in such a way that the radiation emitted by the radiation sources is bundled at a location of a detection surface of the detector. For this purpose, the concave mirrors 116, 118 are provided with a reflective coating, which is preferably a gold layer.

The radiation emitted from the radiation sources is also conveyed via a respective cylindrical, metal-coated tube 120, 122. One of the first and second half-shells 106, 112 in each case contains approximately half of the concave mirrors 116, 118 and the tubes 120, 122. A closed structure is formed by joining the two halves. The longitudinal axes of the two bodies of the tube 120, 122 enclose an angle $\gamma$ with each other which in the illustrated symmetrical embodiment is halved by a center line of the gas measuring chamber 110. This arrangement allows beam guidance in the direction of the detector.

The gas measuring chamber 110 may be filled with the gas via an elongated gas receiving aperture 124. A temperature sensor (not shown here) for monitoring temperature in the gas measuring chamber 110 can be introduced through a sensor receiving opening 126.

The gas sensor arrangement 100 according to the present invention can be assembled as a complete module on a printed circuit carrier, such as a printed circuit board (PCB) 128. For mechanically fixing the first half-shell 106 to the PCB 128, the first half-shell 106 comprises first half-shell mounting apertures 130, 132. The first half-shell 106 can thus be screwed to the PCB 128. Alternatively, a latching or the like could be provided for mechanically fixing the first half-shell 106 to the PCB 128. For fully automated assembly, the temperature sensor and the two radiation sources could be arranged on the PCB 128 before the first half-shell 106 is positioned and screwed to the PCB 128. The detector is introduced into the detector receiving opening 108 and is fixed to the first half-shell 106 by means of a screw (not shown here), which can be screwed through a threaded aperture 144.

In the next assembly step, the second half-shell 112 is pushed over the first half-shell 106, which has already been fixed with the detector. The second half-shell 112 can also be securely fixed to the PCB 128 via second half-shell mounting apertures 134, 136, 138 and 140. To prevent penetration of moisture, dust, and disruptive stray light, in the illustrated embodiment, a peripheral seal 142 is provided on the second half-shell 112 of the housing. The peripheral seal 142 comes into contact with the PCB 128.

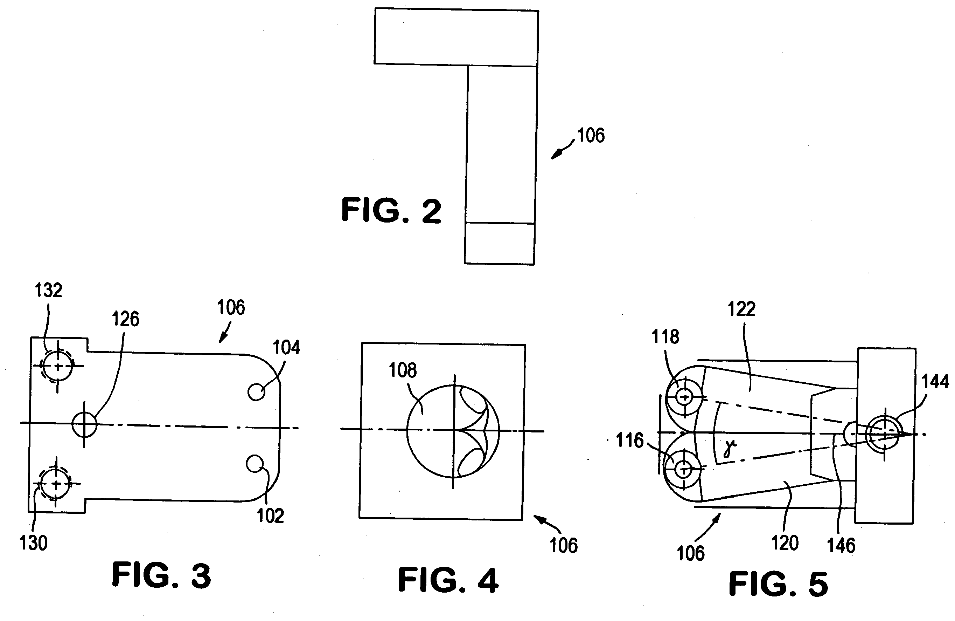

Figs. 2-5 show various side views of the first half-shell 106 of the housing. The guidance of the radiation can particularly be seen from the plan view in Fig. 5 where the two radiation sources are arranged symmetrically with respect to an axis of symmetry 146 of the gas measuring chamber 110 and the detector is arranged on this axis of symmetry 146 in such a way that the beam paths of the radiation sources are the same effective path length from the detector. The illustrated arrangement can, for example, be operated in such a way, as DE 19925196 C2 shows, where one of the radiation sources is used as the measuring radiation source and the other of the radiation sources is used as the reference radiation source. The reference radiation source can be switched on at intervals to check the age of the measuring radiation source. Deviations with respect to the output signals of the detector when the reference radiation source and the measuring radiation source are switched on provide information about the age of the measuring radiation source which can optionally be compensated. The reliability and service life of the gas sensor arrangement 100, particularly in the motor vehicle sector, may be fundamentally increased in this way. The source receiving openings 102 and 104, in which the radiation sources are arranged, are located in a vicinity of a focal point of the concave mirrors 116, 118. The emitted radiation can therefore be focused on the detection surface of the detector. The metal coated surface of the tubes 120, 122 also guide a portion of the radiation to the detector.

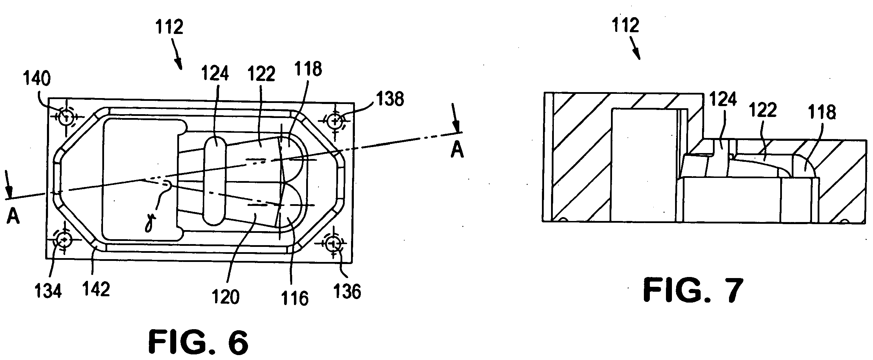

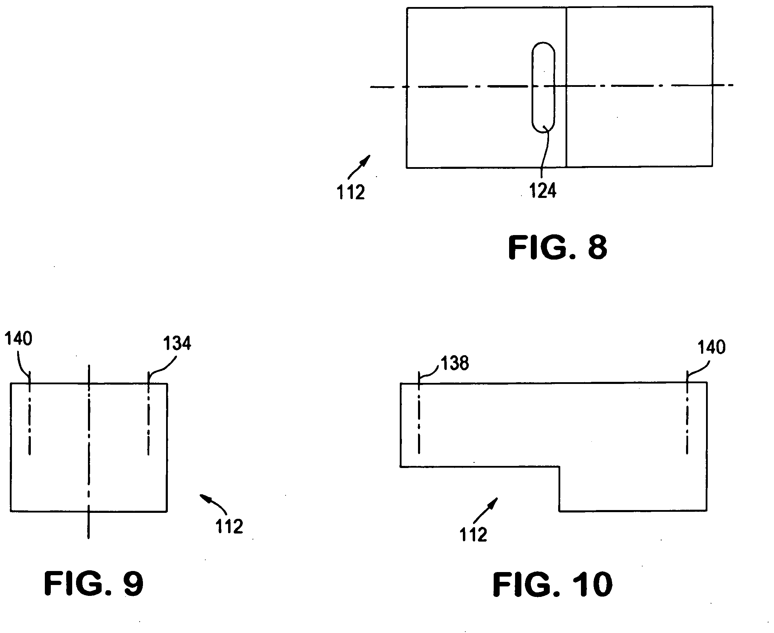

Figs. 6-10 show various views of the second half-shell 112. Figs. 6-8 clearly show the gas receiving aperture 124 where entry of the gas to be analyzed takes place. To prevent soiling and premature aging of the sensor arrangement, suitable filtering materials may cover the gas receiving aperture 124.

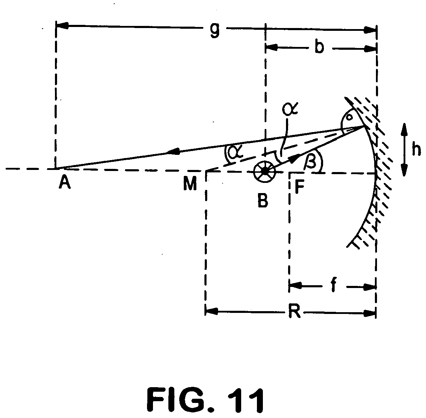

The geometric calculation of the concave mirrors 116, 118 will be discussed with reference to Fig. 11. The radiation source is arranged at point B for the best possible signal yield at the detector. The point B is in a vicinity of a focal point F of the concave mirror 116 and allows focusing of the beam at point A, which corresponds to the position of the detector. The detector has a detecting area of about 1.5 millimeters squared. The concave mirror 116 has a center of curvature M and a beam path angle $2\alpha$. Using the designations from Fig. 11, equations (1) and (2) apply:

$$\frac{1}{f} = \frac{1}{g} + \frac{1}{b} \qquad (1)$$

$$f = \frac{R}{2} \qquad (2)$$

If the equation (1) is inserted into the equation (2) then with the values 21.75 millimeters for g and 1.61 millimeters for b, the following is obtained for radius R of the concave mirror 116:

$$R = \frac{2}{\frac{1}{21.75} + \frac{1}{1.61}} mm = 3 \; mm \qquad (3)$$

Height h is also selected as h=R=3 and angle $\beta$ amounts to

$$\beta = \frac{h}{g-k} = 9.16° \qquad (4)$$

Using the illustrated gas sensor arrangement 100 according to the present invention, it is possible to optimize the signal yield at the detector and simultaneously provide for highly simplified assembly which can be automated. The gas sensor arrangement 100 according to the present invention can therefore primarily be advantageously used in conjunction with the spatial environmental conditions of motor vehicle use.

**Claims**

1. Gas sensor arrangement (100) comprising:

   a plurality of radiation sources emitting radiation, a gas measuring chamber (110) which may be filled with a gas containing at least one analyte to be measured, a detector detecting the radiation which generates an output signal dependent on the presence and/or concentration of the analyte,
   a housing comprising a first half-shell (106) which is joined with a second half-shell (112) to form a closed structure, the first half-shell (106) having a detector receiving opening (108) and a plurality of radiation source receiving openings (102, 104),
   wherein a concave mirror (116, 118) is arranged around each radiation source receiving opening (102, 104), the radiation sources being arranged in a vicinity of a focal point (F) of the corresponding concave mirror (116, 118) such that there is bundling of the emitted radiation in a region in which the detector is arranged,
   wherein the concave mirrors (116, 118) are formed by inner surfaces of the first and second half-shells (106, 112),
   wherein respective cylindrical or funnel-shaped tubes (120, 122) are provided for conveying radiation from each of the radiation sources to the detector, each tube (120, 122) being formed by the inner surfaces of the first and second half-shells (106, 112),
   wherein the inner surfaces which form the tubes and the concave mirrors are provided with a reflective coating.

**2.** Gas sensor arrangement according to claim 1, **characterized in that** the radiation sources and the detector are at least partially held in the first half-shell (106) and the first half-shell (106) is at least partially received in the second half-shell (112).

**3.** Gas sensor arrangement according to claim 1 or 2, **characterized in that** the first half-shell (106) is mounted on a printed circuit carrier (128).

**4.** Gas sensor arrangement (100) according to claim 3, **characterized in that** the housing (106, 112) comprises a peripheral seal (142) which, in conjunction with a printed circuit carrier (128) on which the gas sensor arrangement is assembled, seals the gas measuring chamber (110) from the environment.

**5.** Gas sensor arrangement (100) according to any one of claims 1 to 4, **characterized in that** the radiation to be detected is infrared radiation and the radiation sources are formed by an infrared radiation source, preferably a light-emitting diode or a lamp emitting a broadband light spectrum.

**6.** Gas sensor arrangement (100) according to any one of claims 1 to 5, **characterized in that** at least one measuring radiation source and at least one reference radiation source are provided which are arranged symmetrically with respect to at least one axis of symmetry (146) of the gas measuring chamber (110), and **in that** the detector is arranged on the axis of symmetry (146) in such a way that the beam paths of the radiation sources are the same effective path length from the detector.

**7.** Gas sensor arrangement (100) according to any one of claims 1 to 6, **characterized in that** at least one temperature sensor is provided for monitoring the temperature in the gas measuring chamber (110).

**8.** Gas sensor arrangement (100) according to any one of claims 1 to 7, **characterized in that** the housing (106, 112) is produced from a plastic material using injection molding and the reflective coating is a metal.

**9.** Gas sensor arrangement (100) according to claim 8, **characterized in that** the metal, preferably a gold layer, is deposited by sputtering, vapour deposition or by means of electroplating.

**10.** Gas sensor arrangement (100) according to any one of claims 1 to 9, **characterized in that** the gas sensor arrangement (100) is set up to detect the analyte in the gas, preferably carbon dioxide, and/or to determine the concentration thereof.

**Patentansprüche**

**1.** Gassensoranordnung (100), die umfasst:

eine Vielzahl von Strahlungsquellen, die Strahlung emittieren, eine Gasmesskammer (110), die mit einem Gas gefüllt werden kann, das wenigstens einen zu messenden Analyten enthält, einen die Strahlung detektierenden Detektor, der ein Ausgangssignal in Abhängigkeit von Vorhandensein und/oder Konzentration des Analyten erzeugt,
ein Gehäuse mit einer ersten Teilschale (106), die mit einer zweiten Teilschale (112) verbunden ist, um eine geschlossene Struktur zu bilden, wobei die erste Teilschale (106) eine Detektoraufnahmeöffnung (108) und eine Vielzahl von Strahlungsquellenaufnahmeöffnungen (102, 104) hat,
wobei ein Hohlspiegel (116, 118) um jede Strahlungsquellenaufnahmeöffnung (102, 104) herum angeordnet ist, wobei die Strahlungsquellen in einer Nähe eines Brennpunktes (F) des entsprechenden Hohlspiegels (116, 118) angeordnet sind, so dass es eine Bündelung der emittierten Strahlung in einem Bereich gibt, in dem der Detektor angeordnet ist,
wobei die Hohlspiegel (116, 118) durch Innenflächen der ersten und der zweiten Teilschale (106, 112) gebildet werden,
wobei jeweilige zylindrische oder trichterförmige Rohre (120, 122) zum Weiterleiten von Strahlung von jeder der Strahlungsquellen zum Detektor bereitgestellt werden, wobei jedes Rohr (120, 122) durch die Innenflächen der ersten und der zweiten Teilschale (106, 112) gebildet wird, wobei die Innenflächen, die die Rohre und Hohlspiegel bilden, mit einer reflektierenden Beschichtung versehen sind.

**2.** Gassensoranordnung nach Anspruch 1, **dadurch gekennzeichnet, dass** die Strahlungsquellen und der Detektor wenigstens teilweise in der ersten Teilschale (106) gehalten werden und die erste Teilschale (106) wenigstens teilweise in der zweiten Teilschale (112) aufgenommen wird.

3. Gassensoranordnung nach Anspruch 1 oder 2, **dadurch gekennzeichnet, dass** die erste Teilschale (106) auf einem gedruckten Schaltungsträger (128) angebracht ist.

4. Gassensoranordnung (100) nach Anspruch 3, **dadurch gekennzeichnet, dass** das Gehäuse (106, 112) eine Umfangsdichtung (142) umfasst, die in Verbindung mit einem gedruckten Schaltungsträger (128), auf dem die Gassensoranordnung montiert ist, die Gasmesskammer (110) von der Umgebung abdichtet.

5. Gassensoranordnung (100) nach einem der Ansprüche 1 bis 4, **dadurch gekennzeichnet, dass** die zu detektierende Strahlung Infrarotstrahlung ist und die Strahlungsquellen durch eine Infrarotstrahlungsquelle, vorzugsweise eine Leuchtdiode oder eine Lampe gebildet werden, die ein Breitband-Lichtspektrum emittiert.

6. Gassensoranordnung (100) nach einem der Ansprüche 1 bis 5, **dadurch gekennzeichnet, dass** wenigstens eine Messstrahlungsquelle und wenigstens eine Referenzstrahlungsquelle bereitgestellt werden, die mit Bezug auf wenigstens eine Symmetrieachse (146) der Gasmesskammer (110) symmetrisch angeordnet sind, und dass der Detektor auf der Symmetrieachse (146) in einer solchen Weise angeordnet ist, dass die Strahlenwege der Strahlungsquellen die gleiche effektive Weglänge vom Detektor aufweisen.

7. Gassensoranordnung (100) nach einem der Ansprüche 1 bis 6, **dadurch gekennzeichnet, dass** wenigstens ein Temperatursensor zum Überwachen der Temperatur in der Gasmesskammer (110) bereitgestellt wird.

8. Gassensoranordnung (100) nach einem der Ansprüche 1 bis 7, **dadurch gekennzeichnet, dass** das Gehäuse (106, 112) aus einem Kunststoffmaterial mittels Spritzgussverfahren hergestellt ist und die reflektierende Beschichtung ein Metall ist.

9. Gassensoranordnung (100) nach Anspruch 8, **dadurch gekennzeichnet, dass** das Metall, vorzugsweise eine Goldschicht, durch Sputtern, Dampfabscheidung oder mithilfe der Galvanisierung aufgebracht wird.

10. Gassensoranordnung (100) nach einem der Ansprüche 1 bis 9, **dadurch gekennzeichnet, dass** die Gassensoranordnung (100) eingerichtet ist, um das Analyt in dem Gas, vorzugsweise Kohlendioxid, zu erfassen und/oder dessen Konzentration zu bestimmen.

## Revendications

1. Agencement de capteur de gaz (100) comprenant :

    une pluralité de sources de rayonnement émettant un rayonnement, une chambre de mesure de gaz (110) qui peut être remplie d'un gaz contenant au moins un analyte à mesurer, un détecteur détectant le rayonnement qui génère un signal de sortie dépendant de la présence et/ou de la concentration de l'analyte,
    un boîtier comprenant une première demi-coque (106) qui est jointe à une deuxième demi-coque (112) pour constituer une structure fermée, la première demi-coque (106) disposant d'une ouverture de réception de détecteur (108) et d'une pluralité d'ouvertures de réception de sources de rayonnement (102, 104),
    dans lequel un miroir concave (116, 118) est disposé autour de chaque ouverture de réception de sources de rayonnement (102, 104), les sources de rayonnement étant disposées à proximité d'un point focal (F) du miroir concave correspondant (116, 118) de sorte qu'il existe un regroupement du rayonnement émis dans une zone dans laquelle le détecteur est disposé,
    dans lequel les miroirs concaves (116, 118) sont formés par des surfaces internes des première et deuxième demi-coques (106, 112),
    dans lequel des tubes cylindriques ou en forme d'entonnoir (120, 122) sont fournis pour convoyer un rayonnement depuis chacune des sources de rayonnement vers le détecteur, chaque tube (120, 122) étant formé par les surfaces internes des première et deuxième demi-coques (106, 112), dans lequel les surfaces internes qui forment les tubes et les miroirs concaves sont dotées d'un revêtement réflectif.

2. Agencement de capteur de gaz selon la revendication 1, **caractérisé en ce que** les sources de rayonnement et le détecteur sont au moins partiellement maintenus dans la première demi-coque (106) et la première demi-coque (106) est au moins partiellement réceptionnée dans la deuxième demi-coque (112).

3. Agencement de capteur de gaz selon la revendication 1 ou 2, **caractérisé en ce que** la première demi-coque (106) est installée sur un support de circuit imprimé (128).

4. Agencement de capteur de gaz (100) selon la revendication 3, **caractérisé en ce que** le boîtier (106, 112) comprend un joint d'étanchéité périphérique (142) qui, conjointement à un support de circuit imprimé (128) sur lequel l'agencement de capteur de gaz est assemblé, isole la chambre de mesure de gaz (110) de l'environnement.

5. Agencement de capteur de gaz (100) selon l'une quelconque des revendications 1 à 4, **caractérisé en ce que** le rayonnement à détecter est un rayonnement infrarouge et les sources de rayonnement sont constituées par une source de rayonnement infrarouge, de préférence une diode électroluminescente ou une lampe émettant un spectre lumineux en large bande.

6. Agencement de capteur de gaz (100) selon l'une quelconque des revendications 1 à 5, caractérisé e ce qu'au moins une source de rayonnement de mesure et au moins une source de rayonnement de référence sont fournies qui sont agencées symétriquement par rapport à au moins un axe de symétrie (146) de la chambre de mesure de gaz (110), et en ce que le détecteur est agencé sur l'axe de symétrie (146) de telle sorte que les chemins de faisceau des sources de rayonnement sont de la même longueur de chemin effective depuis le détecteur.

7. Agencement de capteur de gaz (100) selon l'une quelconque des revendications 1 à 6, **caractérisé en ce qu'**au moins un capteur de température est fourni pour surveiller la température dans la chambre de mesure de gaz (110).

8. Agencement de capteur de gaz (100) selon l'une quelconque des revendications 1 à 7, **caractérisé en ce que** le boîtier (106, 112) est produit à partir d'un matériau de plastique en utilisant un moulage par injection et le revêtement réflectif est un métal.

9. Agencement de capteur de gaz (100) selon la revendication 8, **caractérisé en ce que** le métal, de préférence une couche d'or, est déposé par pulvérisation, dépôt de vapeur ou au moyen d'une électrodéposition.

10. Agencement de capteur de gaz (100) selon l'une quelconque des revendications 1 à 9, **caractérisé en ce que** l'agencement de capteur de gaz (100) est configuré pour détecter l'analyte dans le gaz, de préférence du dioxyde de carbone, et/ou pour déterminer la concentration de celui-ci.

**FIG. 1**

FIG. 5

FIG. 2

FIG. 4

FIG. 3

**FIG. 7**

**FIG. 6**

FIG. 8

FIG. 10

FIG. 9

# FIG. 11

**REFERENCES CITED IN THE DESCRIPTION**

**Patent documents cited in the description**

- EP 0616207 A2
- WO 0055603 A1
- DE 19925196 C2
- US 2002139934 A1
- US 6410918 B1
- US 6067840 A